Europäisches Patentamt

European Patent Office

Office européen des brevets

(19)

(11) Veröffentlichungsnummer : **0 029 802**
**B1**

(12) EUROPÄISCHE PATENTSCHRIFT

(45) Veröffentlichungstag der Patentschrift :
30.03.83

(21) Anmeldenummer : 80810303.0

(22) Anmeldetag : 29.09.80

(51) Int. Cl.³ : **B 01 D 39/20**// C04B21/06,
C04B35/78

(54) Keramischer Filter mit schaumartiger Struktur zum Filtrieren von Metallschmelzen.

(30) Priorität : 09.10.79 US 83193

(43) Veröffentlichungstag der Anmeldung :
03.06.81 Patentblatt 81/22

(45) Bekanntmachung des Hinweises auf die Patenterteilung : 30.03.83 Patentblatt 83/13

(84) Benannte Vertragsstaaten :
AT BE CH DE FR GB IT LI NL

(56) Entgegenhaltungen :
DD A 131 642
DE A 2 613 023
DE A 2 848 005
DE C 134 739
DE C 289 061
DE C 339 405
DE C 481 387
DE C 1 227 663
DE C 1 253 461
GB A 1 476 481
GB A 1 512 766
US A 3 382 650
US A 4 075 303
CHEMIE-ING.-TECHNIK, Band 48, Nr. 5, 1976
Weinheim/Bergstr. G. HOFFMANN et al. « Eigenschaften und Anwendung gesinterter, korrosionsbeständiger Filterwerkstoffe » Seiten 410
bis 416
Die Akte enthält technische Angaben, die nach dem
Eingang der Anmeldung eingereicht wurden und die
nicht in dieser Patentschrift enthalten sind.

(73) Patentinhaber : Schweizerische Aluminium AG

CH-8212 Neuhausen am Rheinfall (CH)

(72) Erfinder : Blome, James C.
P.O. Box 821
Bridgeton Missouri 63044 (US)

## Keramischer Filter mit schaumartiger Struktur zum Filtrieren von Metallschmelzen

Die Erfindung bezieht sich auf einen keramischen Filter mit schaumartiger Struktur, insbesondere mit einer schaumartigen offenzelligen Struktur aus einer Vielzahl von miteinander verbundenen Hohlräumen, die mit einem Netzwerk aus keramischem Werkstoff umgeben sind, zum Filtrieren von Metallschmelzen.

In der Praxis enthalten Metallschmelzen, insbesondere Aluminiumschmelzen, im allgemeinen mitgeschleppte Feststoffe, welche sich auf das Gussprodukt nachteilig auswirken. Diese mitgeschleppten Feststoffe stammen üblicherweise aus drei Quellen. Ein Teil dieser Feststoffe sind Partikel aus Aluminiumoxid, welche sich von der auf der Metallschmelze schwimmenden Oxidhaut ablösen und in das strömende Metall gelangen. Andere mitgeschleppte Partikel sind Bruchstücke von Ofenauskleidungen, Ueberführungsbehältern und anderen schmelzeführenden Teilen von Einrichtungen, welche erodiert und in die fliessende Aluminiumschmelze eingeschleppt werden. Wieder andere Partikel sind Ausscheidungen von unlöslichen Verunreinigungen wie intermetallische Phasen, Boride, Carbide und andere Ausfällungen von Aluminiumverbindungen, wie beispielsweise Chloride. Wenn diese Partikel als Einschlüsse im Gussprodukt auftreten, nachdem das Aluminium erstarrt ist, so haben diese eine geringere Duktilität oder schlechtere Nachbearbeitungseigenschaften des Gussproduktes zur Folge.

Es ist demzufolge wünschenswert, mitgeschleppte Feststoffe aus der fliessenden Aluminiumschmelze zu entfernen, bevor die Metallschmelze zu Festkörpern vergossen wird, welche als solche verwendet oder weiteren Umformoperationen wie Walzen, Schmieden, Pressen usw. unterzogen werden.

Filtrierverfahren zur Entfernung von mitgeschleppten Feststoffen aus Flüssigkeiten beinhalten den Durchlauf der mit Feststoffen beladenen Flüssigkeit durch ein poröses Filtermedium, welches die Feststoffe zurückhält. Das Filtrieren von Metallschmelzen im allgemeinen und von Aluminiumschmelzen im speziellen schafft besondere Probleme, da die Flüssigkeit derart aggressiv ist, dass es schwierig ist, ein Filtermedium zu finden, welches gegen diese beständig ist.

Im allgemeinen werden zwei Filtrierverfahren zur Entfernung mitgeschleppter Feststoffe aus geschmolzenen Aluminiumlegierungen vor deren Vergiessen angewendet. Das bekannteste Filtermedium ist ein Filtriertuch aus einem Glasfasergewebe, welches im Metallüberführungstrog, in der Giessrinne oder sogar in der Metallschmelze im oberen Teil des erstarrenden Barrens angeordnet wird. Diese Filtriertücher vermögen nur die grösseren Einschlüsse aus der Metallschmelze zu entfernen und brechen zudem leicht während des Betriebes, da die Glasfasern bei der Temperatur der Aluminiumschmelze sehr schwach werden. Bei einem weiteren Verfahren nach dem Stand der Technik wird die Aluminiumschmelze durch ein Bett aus lockeren Aluminiumoxidpartikeln, beispielsweise in Plattenform, filtriert. Diesem Verfahren haften jedoch oft die normalerweise bei Filterbetten auftretenden Nachteile an, indem zu viele Feststoffe durchdringen. Ebenso weist ein derartiges Filterbett eine starke Tendenz zur Bildung von Kanälen auf, was dessen Filtrierwirkung herabsetzt. Die Porengrösse des Filters kann nicht auf einfache Weise kontrolliert werden, sondern verändert sich vielmehr leicht unter den Betriebsbedingungen, so dass sie, selbst bei ursprünglich richtiger Dimensionierung, nicht wirksam aufrechterhalten werden kann. Zudem muss das Metall ständig in geschmolzenem Zustand gehalten werden, wenn der Filter ausser Betrieb ist.

Ein verbessertes Verfahren zur Entfernung von Feststoffen aus geschmolzenen Aluminiumlegierungen ist aus der US-PS 3 893 917 bekannt. Dieses Verfahren verwendet einen keramischen Filter mit einer offenzelligen, durch eine Vielzahl von mit einem Netzwerk aus keramischem Werkstoff umgebenen, miteinander verbundenen Hohlräumen gebildeten Struktur. Durch die Verwendung dieses keramischen Filters wird der Wirkungsgrad der Filtration stark erhöht. Nachteilig wirkt sich bei diesem keramischen Filter aus, dass dessen mechanische Festigkeit nicht sehr hoch ist.

Die Aufgabe der vorliegenden Erfindung lag nun darin, einen keramischen Filter mit schaumartiger Struktur der eingangs erwähnten Art zu schaffen, der einen hohen Wirkungsgrad bei der Filtration von Metallschmelzen zeigt und bessere mechanische Festigkeitseigenschaften aufweist.

Erfindungsgemäss wird die Aufgabe dadurch gelöst, dass der keramische Werkstoff 1 bis 5 Gewichts-%, bezogen auf die Menge keramischen Werkstoffes, Fasern aus keramischem Material enthält und die Fasern aus dem Netzwerk unter Bildung einer faserigen Porenoberfläche hervorstehen.

Mit der vorliegenden Erfindung wird ein hoch wirksames, keramisches schaumartiges Material zur Filtration von Metallschmelzen geschaffen, welches sich durch verbesserte mechanische Festigkeitseigenschaften auszeichnet. Der erfindungsgemässe Filter wird durch Imprägnierung eines organischen Schaummaterials mit einer wässrigen Aufschlämmung keramischer Werkstoffe, welche Fasern aus keramischem Material enthält, hergestellt.

Weitere Vorteile, Merkmale und Einzelheiten der Erfindung ergeben sich aus der nachfolgenden Beschreibung, den Beispielen und den Zeichnungen. Es zeigen :

Figur 1 eine mikroskopische Aufnahme von Fasern (1) aus keramischem Material die aus dem Netzwerk (2) des keramischen Werkstoffs ragen.

Figuren 2 und 3 den Einfluss von Zusätzen an Fasern aus keramischem Material auf die mechanischen Festigkeitseigenschaften keramischer Schaumfilter.

In Uebereinstimmung mit der vorliegenden Erfindung wird der keramische Schaum aus einem offenzelligen, hydrophilen und flexiblen Schaummaterial, welches eine Vielzahl von mit einem Netzwerk aus diesem flexiblen Schaummaterial umgebenen, miteinander verbundenen Hohlräumen aufweist, hergestellt. Typische Materialien, die hierzu verwendet werden können, sind Polymerschäume wie etwa Polyurethanschäume und Zelluloseschäume. Allgemein kann jeder brennbare organische Plastikschaum verwendet werden, welcher genügend Elastizität aufweist und die Fähigkeit besitzt, nach der Verformung wieder seine ursprüngliche Gestalt anzunehmen. Der Schaum muss unterhalb der Brenntemperatur des verwendeten keramischen Werkstoffes verbrennen oder sich verflüchtigen. Das verwendete Schaummaterial sollte eine Porenzahl von 2 bis 40 Poren je cm Länge aufweisen, damit die zur Filtration benötigte innere Oberfläche erzeugt werden kann.

Die Abmessungen des Schaummaterials können natürlich je nach den gewünschten Abmessungen des endgültigen Filtermediums bezüglich der Seitenlänge und Dicke verändert werden. Allgemein wird ein Schaummaterial mit einer Dicke von 0,6 bis 10 cm, vorzugsweise 2,5 bis 7,5 cm, verwendet.

Die zur Anwendung gelangende wässrige Aufschlämmung keramischer Werkstoffe ist natürlich abhängig vom keramischen Material, welches für das zu filtrierende Metall gewünscht wird. Das Endprodukt muss dem chemischen Angriff der Metallschmelze standhalten können und auch genügende Stabilität und mechanische Festigkeit bei erhöhter Temperatur aufweisen. Ueberdies sollte die keramische Aufschlämmung gute Fliesseigenschaften zeigen und aus einer wässrigen Suspension des zur Anwendung im Filter vorgesehenen keramischen Werkstoffes bestehen. Typische keramische Werkstoffe, welche verwendet werden können, sind Aluminiumoxid, Chromoxid, Zirkonoxid, Magnesiumoxid, Titanoxid, Siliziumoxid sowie Mischungen davon. Ein bevorzugter keramischer Werkstoff enthält 40 bis 95 Gew.-% $Al_2O_3$, 1 bis 25 Gew.-% $Cr_2O_3$, 0,1 bis 12 Gew.-% Bentonit, 0,1 bis 12 Gew.-% Kaolin und 2,5 bis 25 Gew.-% eines in Luft abbindenden Mittels, welches sich im wesentlichen inert gegenüber der Metallschmelze verhält. Derartige Mittel sind beispielsweise Aluminiumorthophosphat, Magnesiumorthoborat und Aluminiumhydroxichlorid. In Uebereinstimmung mit der vorliegenden Erfindung werden der Aufschlämmung der keramischen Werkstoffe die Fasern aus keramischem Material zugesetzt und mittels eines Intensivmischers fein verteilt. Es hat sich gezeigt, dass ein Zusatz von mehr als 5 Gew.-% keramischen Fasermaterials zur Aufschlämmung eine Klumpenbildung der Fasern zur Folge hat und demzufolge keine gute Dispersion erreicht werden kann. Des weiteren wurde gefunden, dass ein Zusatz von mindestens 1 Gew.-% notwendig ist, um eine merkliche Festigkeitssteigerung zu erzielen. Der bevorzugte Zusatz liegt zwischen 1,5 und 5 Gew.-%.

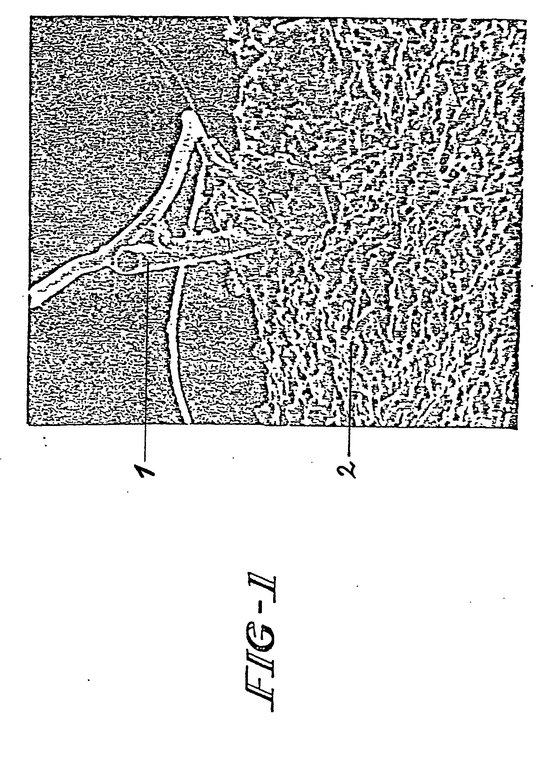

Das Filtermaterial der vorliegenden Erfindung kann in Uebereinstimmung mit dem in der US-PS 3 893 917 beschriebenen, allgemeinen Verfahren hergestellt werden. Es wird eine wässrige Aufschlämmung keramischer Werkstoffe mit einem Zusatz an Fasern eines keramischen Materials hergestellt und damit das Schaummaterial imprägniert, so dass das Netzwerk überzogen und die Hohlräume im wesentlichen mit der Aufschlämmung gefüllt werden. Das imprägnierte Schaummaterial wird sodann zwischen zwei fest eingestellten Walzen derart zusammengepresst, dass etwa 80 % der Aufschlämmung wieder herausgequetscht und der verbleibende Rest gleichmässig über das Schaummaterial verteil wird. Das mit der Aufschlämmung überzogene Schaummaterial wird sodann getrocknet und erhitzt, um zuerst den flexiblen organischen Schaum zu verbrennen und anschliessend den keramischen Ueberzug zu sintern, wobei der keramische Schaum erzeugt wird. Dieser keramische Schaum weist eine Vielzahl von Hohlräumen auf, welche durch ein Netzwerk von gesintertem keramischem Werkstoff in der Konfiguration des flexiblen Schaums umgeben sind. Wie aus Figur 1 hervorgeht, heben sich die Fasern (1) aus keramischem Material von den Wänden des gesinterten keramischen Werkstoffes (2) ab und bilden eine faserige Porenoberfläche, durch welche der Wirkungsgrad der Filtration erhöht wird.

Der keramische Filter gemäss der Erfindung dient zum Filtrieren einer Metallschmelze. Dies erfolgt z. B. dadurch, dass man die Metallschmelze mit einem Durchsatzvolumen von 1,25 bis 12,5 $dm^3$ pro $dm^2$ Filterfläche und Minute durch den keramischen Filter giesst. Das bevorzugte Durchsatzvolumen für Aluminium liegt zwischen 2,5 und 7,5 $dm^3$ pro $dm^2$ Filterfläche und Minute. Die Metallfliessraten bei normalen Aluminiumgiessverfahren variieren von einem Minimum von etwa 90 kg pro Minute bis zu einem Maximum von über 900 kg Metall pro Minute, mit einer typischen mittleren Metallfliessrate von etwa 225 kg pro Minute. In Uebereinstimmung mit der vorliegenden Erfindung sind die keramischen Filter vorliegender Erfindung sehr gut geeignet, unter Einhaltung der vorstehend beschriebenen Metallfliessraten erfolgreich zu arbeiten. Gewöhnlich sollte die spezifische Fliessrate für Aluminium durch den Filter 35 kg Metall pro $dm^2$ Filterfläche und Minute nicht übersteigen, und vorzugsweise sollte sie unter 21 kg pro $dm^2$ Filterfläche und Minute liegen. Höhere spezifische Fliessraten durch den Filter als vorstehend angegeben, ergeben zuviele unerwünschte intermetallische Anteile in Metall nach dem Filterdurchlauf, was für die Erzeugung von hochreinen Blechprodukten ungünstig ist. Die untere Grenze wird durch praktische Grössenerwägungen bestimmt. Es würde einen unpraktisch grossen Filter erfordern, um Metallfliessraten von über 450 kg Metall pro Minute zu handhaben, d. h. es wäre ein quadratischer keramischer Filter von über 114 cm Seitenlänge oder von mehr als 130 dm² Filterfläche erforderlich. Ein typischer Filter der vorliegenden Erfindung kann bei einer quadratischen Form der Oberfläche mit einer Seitenlänge von 40 cm etwa 16 dm² Filterfläche aufweisen und für eine Metallfliessrate von 225 kg Metall pro Minute bei einer spezifischen Fliessrate von 14 kg pro dm² und Minute ausgelegt sein.

Mit der vorliegenden Erfindung wird ein hochwirksames, keramisches Material mit Schaumstruktur zum Gebrauch beim Filtrieren von Metallschmelzen, insbesondere Aluminiumschmelzen, geschaffen. Das keramische Material der vorliegenden Erfindung ist gekennzeichnet durch eine offenzellige, durch eine Vielzahl von mit einem Netzwerk aus keramischem Werkstoff umgebenen, miteinander verbundenen Hohlräumen gebildete Struktur und enthält einen Anteil an Fasern aus einem keramischen Material. Bevorzugt liegt die Luftdurchlässigkeit des Filters im Bereich vom 400 bis 8 000 × 10⁻⁷ cm², die Porosität oder der Hohlraumanteil zwischen 0,80 und 0,95, die Porenzahl zwischen 2 und 18 Poren je cm Länge und die Dicke des Filters zwischen 0,6 und 10 cm. In Uebereinstimmung mit der vorliegenden Erfindung wurde gefunden, dass der vorstehend gekennzeichnete Filter besonders wertvoll zum Filtrieren von geschmolzenem Metall, insbesondere geschmolzenem Aluminium ist. Zahlreiche Vorteile werden bei Verwendung des Filters der vorliegenden Erfindung erreicht, von denen einige vorstehend genannt sind und nachstehend ausführlicher beschrieben werden.

Im Normalfall verwendet man einen relativ feinporigen Filter nach vorliegender Erfindung mit einer Lufdurchlässigkeit von 400 bis 2 500 × 10⁻⁷ cm², einer Porosität oder einem Hohlraumanteil von 0,80 bis 0,95 und einer Porenzahl von 8 bis 18 Poren je 1 cm Länge, und zwar insbesondere, wenn man Aluminiumlegierungen der Reihe 5 000 (ein mit Magnesium legiertes Aluminium ; vergl. « Aluminium and Aluminium Alloys », American Welding Society, New York, Seiten 3-9) filtriert. Wenn jedoch das zu filtrierende Metall besonders stark verunreinigt ist, sollte man das Metall vorgängig durch einen verhältnismässig grobporigen keramischen Filter mit einer Porenzahl von 2 bis 18 Poren je 1 cm Länge, einer Luftdurchlässigkeit von 2 500 bis 8 000 × 10⁻⁷ cm² und einer Porosität oder einem Hohlraumanteil von 0,90 bis 0,95 filtrieren. Hierfür kann man ein einziges keramisches Filter mit abgestuften Eigenschaften versehen, oder man verwendet eine Reihe von Filtern mit unterschiedlicher Porosität.

Beispiel 1

Es wurden drei Ansätze zu je 100 g einer wässrigen Aufschlämmung von keramischen Werkstoffen enthaltend 47 Gew.-% Al₂O₃, 13 Gew.-% Cr₂O₃, 3,5 Gew.-% Kaolin, 1,0 Gew.-% Bentonit und 14,5 Gew.-% eines in Luft abbindenden Mittels, vorbereitet. Zum ersten Ansatz wurden keine Fasern aus keramischem Material zugesetzt. Zum zweiten und dritten Ansatz wurden 2,5 bzw. 5,0 Gew.-%, bezogen auf die Menge keramischer Werkstoffe, Fasern aus keramischem Material in der Form von Aluminiumsilikat zugegeben. Der zweite und dritte Ansatz wurde mittels eines Intensivmischers gerührt, um die Fasern in der Aufschlämmung fein zu verteilen und allfällig vorhandene Klumpen aufzubrechen. In jeden der drei Ansätze mit den Aufschlämmungen wurde ein Stück Schaummaterial aus Polyurethan mit einer Dicke von 5 cm und 12 Poren je 1 cm Länge eingetaucht. Anschliessend wurden gemäss der in der US-PS 3 893 917 offenbarten Lehre keramische Filter hergestellt.

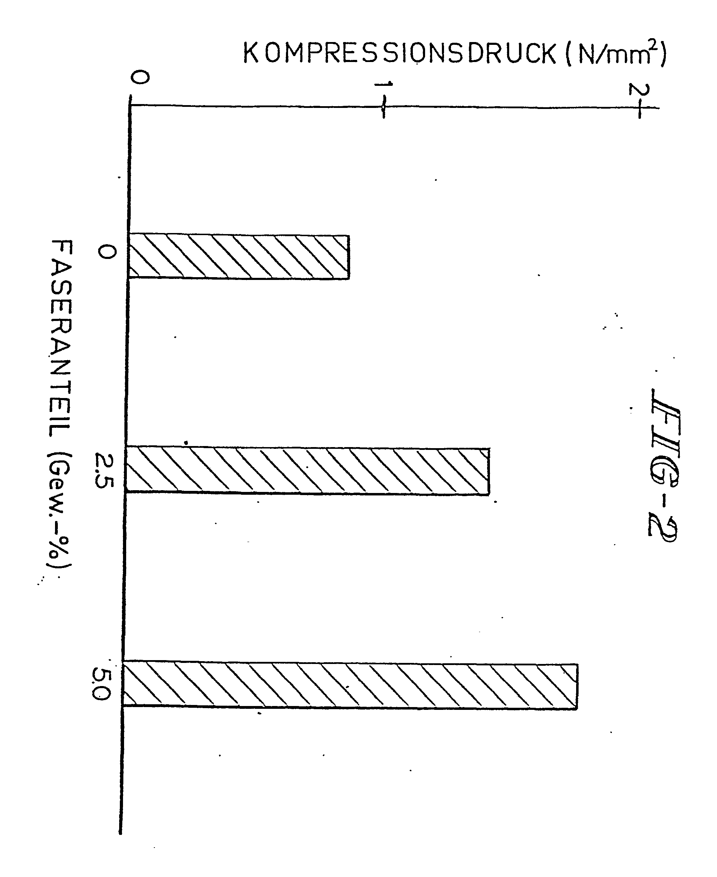

Jeder der nach dem obenerwähnten Verfahren hergestellte keramische Filter wurde Kompressionstests unterworfen. Die Ergebnisse sind in Figur 2 dargestellt. Wie aus Figur 2 hervorgeht, wird der Kompressionsdruck, bei dem der Filter zusammenbricht, mit zunehmender Konzentration an Fasern aus keramischem Material nach höheren Werten hin verschoben, was die Verbesserung der mechanischen Festigkeit der Filterelemente anzeigt.

Beispiel 2

Eine zweite wässrige Aufschlämmung enthaltend 100 % α-Al₂O₃ als keramischer Werkstoff wurde vorbereitet und in drei Ansätze aufgeteilt, wobei der zweite und dritte Ansatz mit einem Zusatz von 1,5 bzw. 2,5 Gew.-%, bezogen auf die Menge α-Al₂O₃, Fasern aus keramischem Material in Form von Aluminiumsilikat versehen wurde. Die Aufschlämmungen wurden sodann verwendet, um ein Schaummaterial aus Polyurethan zu imprägnieren und gemäss der Lehre der US-PS 3 893 917 Filterelemente herzustellen.

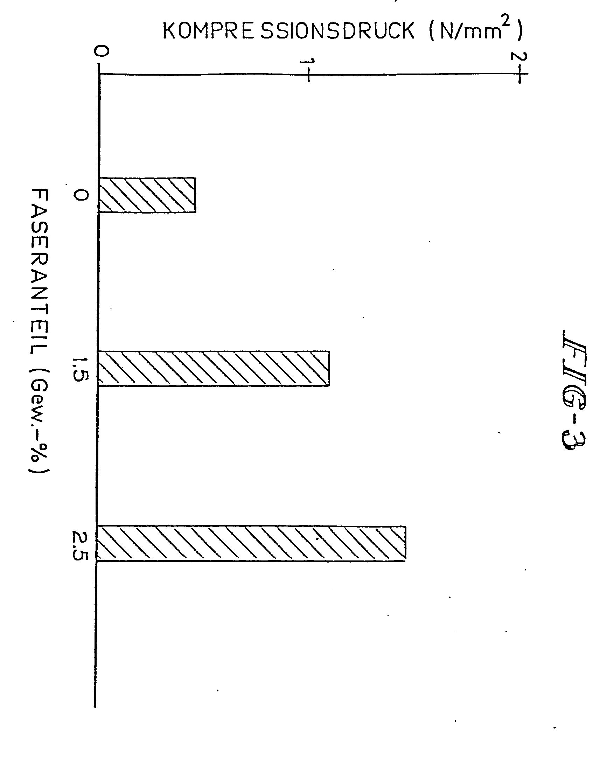

Figur 3 zeigt die Ergebnisse der Kompressionstests, die an den keramischen Filtern durchgeführt wurden, welche aus den drei Aufschlämmungen hergestellt wurden. Auch hier zeigt sich wie im Beispiel 1, dass ein Zusatz von Fasern aus einem keramischem Material eine Steigerung des Kompressionsdruckes zur Folge hat, was die Verbesserung der mechanischen Festigkeit der Filterelemente anzeigt.

**Ansprüche**

1. Keramischer Filter mit schaumartiger Struktur, insbesondere mit einer schaumartigen offenzelligen Struktur aus einer Vielzahl von miteinander verbundenen Hohlräumen, die mit einem Netzwerk aus keramischem Werkstoff umgeben sind, zum Filtrieren von Metallschmelzen, dadurch gekennzeichnet, dass der keramische Werkstoff 1 bis 5 Gew.-%, bezogen auf die Menge keramischen Werkstoffes, Fasern aus keramischem Material enthält und die Fasern aus dem Netzwerk unter Bildung einer faserigen Porenoberfläche hervorstehen.

2. Keramischer Filter mit schaumartiger Struktur nach Anspruch 1, dadurch gekennzeichnet, dass der keramische Werkstoff Aluminiumoxid, Chromoxid, Zirkonoxid, Magnesiumoxid oder Mischungen davon enthält.

3. Keramischer Filter mit schaumartiger Struktur nach Ansprüchen 1 und 2, dadurch gekennzeichnet, dass der keramische Werkstoff 40 bis 95 Gew.-% $Al_2O_3$, 1 bis 25 Gew.-% $Cr_2O_3$, 0,1 bis 12 Gew.-% Bentonit, 0,1 bis 12 Gew.-% Kaolin und 2,5 bis 25 Gew.-% eines in der Luft abbindenden gegenüber Metallschmelzen im wesentlichen inerten Mittels enthält.

4. Keramischer Filter mit schaumartiger Struktur nach Ansprüchen 1 bis 3, dadurch gekennzeichnet, dass der keramische Werkstoff 1,5 bis 5 Gew.-% Fasern aus keramischem Material enthält.

5. Keramischer Filter mit schaumartiger Struktur nach Anspruch 1 bis 4, dadurch gekennzeichnet, dass die Fasern aus Aluminiumsilikat bestehen.

6. Keramischer Filter mit schaumartiger Struktur nach Ansprüchen 1 bis 5, gekennzeichnet durch eine Luftdurchlässigkeit von 400 bis 8 000 × $10^{-7}$ cm², eine Porosität von 0,80 bis 0,95, eine Porenzahl von 2 bis 18 Poren je 1 cm Länge und eine Dicke von 0,6 bis 10 cm.

## Claims

1. Ceramic filter with foam-like structure, especially with a foam-like open-cell structure of a plurality of interconnected cavities, which are surrounded with a network of ceramic material, for filtration of molten metal, characterised in that the ceramic material contains 1 to 5 % by weight, reckoned on the quantity of ceramic material, of fibres of ceramic material, and the fibres project out of the network with formation of a fibrous surface of the pores.

2. Ceramic filter with foam-like structure according to claim 1, characterised in that the ceramic material contains aluminium oxide, chromium oxide, zirconium oxide, magnesium oxide or mixtures of them.

3. Ceramic filter with foam-like structure according to claims 1 and 2, characterised in that the ceramic material contains 40 to 95 % by weight $Al_2O_3$, 1 to 25 % by weight $Cr_2O_3$, 0.1 to 12 % by weight bentonite, 0.1 to 12 % by weight kaolin and 2.5 to 25 % by weight of a material which sets in air and is substantially inert with respect to molten metal.

4. Ceramic filter with foam-like structure according to claims 1 to 3, characterised in that the ceramic material contains 1.5 to 5 % by weight fibres of ceramic material.

5. Ceramic filter with foam-like structure according to claim 1 to 4, characterised in that the fibres consist of aluminium silicate.

6. Ceramic filter with foam-like structure according to claims 1 to 5, characterised by an air permeability of 400 to 8 000 × $10^{-7}$ cm², a porosity of 0.80 to 0.95, a pore size of 2 to 18 pores per linear centimetre and a thickness of 0.6 to 10 cm.

## Revendications

1. Filtre céramique à structure mousseuse, en particulier à structure mousseuse à cellules ouvertes constitué d'un grand nombre de volumes creux reliés ensemble et entourés d'un réseau de matériau céramique, pour le filtrage de métal fondu, caractérisé en ce que le matériau céramique contient 1 à 5 % en poids, rapporté au poids de matériau céramique, de fibres de matériau céramique ; et en ce que les fibres dépassent en dehors du réseau en formant une surface poreuse fibreuse.

2. Filtre céramique à structure mousseuse selon la revendication 1, caractérisé en ce que le matériau céramique contient de l'oxyde d'aluminium, de l'oxyde de chrome, de l'oxyde de zirconium, de l'oxyde de magnésium ou des mélanges de ces oxydes.

3. Filtre céramique à structure mousseuse selon les revendications 1 et 2, caractérisé en ce que le matériau céramique contient 40 à 95 % en poids de $Al_2O_3$, 1 à 25 % en poids de $Cr_2O_3$, 0,1 à 12 % en poids de bentonite, 0,1 à 12 % en poids de kaolin et 2,5 à 25 % en poids d'un agent de prise dans l'air, essentiellement inerte à l'égard du métal fondu.

4. Filtre céramique à structure mousseuse selon les revendications 1 à 3, caractérisé en ce que le matériau céramique contient 1,5 à 5 % en poids de fibres de matériau céramique.

5. Filtre céramique à structure mousseuse selon les revendications 1 à 4, caractérisé en ce que les fibres sont en silicate d'aluminium.

6. Filtre céramique à structure mousseuse selon les revendications 1 à 5, caractérisé par une perméabilité à l'air de 400 à 8 000 × $10^{-7}$ cm², une porosité de 0,80 à 0,95, un nombre de pores de 2 à 18 pores par centimètre de longueur et une épaisseur de 0,6 à 10 cm.

FIG -1

0 029 802

FIG-2

KOMPRESSIONSDRUCK (N/mm²)

FASERANTEIL (Gew.-%)

FIG-3